# EUROPÄISCHE PATENTSCHRIFT

(11) **EP 2 489 848 B1**
(45) Veröffentlichungstag und Bekanntmachung des Hinweises auf die Patenterteilung: **01.11.2017**
(21) Anmeldenummer: 11007528.0
(22) Anmeldetag: 15.09.2011
(51) Int. Cl.: F02B 23/08, F02M 21/02

(54) **Gasottomotor**
Gas petrol engine
Moteur à gaz à explosion

(30) Priorität: 18.02.2011 CH 2842011
(43) Veröffentlichungstag der Anmeldung: 22.08.2012
(73) Patentinhaber: Liebherr-Machines Bulle SA, 1630 Bulle (CH)
(72) Erfinder: Schlager, Gerd, 1630 Bulle (CH); Seidl, Mike, 06567 Bad Frankenhausen (DE); Mansel, Jens, 99734 Nordhausen (DE)
(74) Vertreter: Laufhütte, Dieter

(56) Entgegenhaltungen:
- JP-A- 2003 214 167
- US-A- 3 386 422
- US-A1- 2009 205 607

## Beschreibung

Die vorliegende Erfindung betrifft einen Gasottomotor mit mindestens einem Zylinder, in welchem ein Kolben bewegbar ist, wobei ein extern erzeugtes Gas-Luft-Gemisch in einem durch den Zylinderkopf, die Zylinderwände und den Kolbenboden begrenzten Brennraum verbrennbar ist. Dabei wird das Gas-Luft-Gemisch durch eine Zündkerze entzündet.

Gasottomotoren benötigen für einen optimalen Betrieb ein gewisses Maß an Turbulenz und an Drall im Brennraum, um eine optimale Verbrennung zu gewährleisten. Hierfür ist es bereits bekannt, im Kolbenboden des Kolbens eine asymmetrische Kolbenmulde anzuordnen, um so die Turbulenz und den Drall gezielt zu beeinflussen. Bei den bisher bekannten asymmetrischen Kolbenmulden ist dabei der Grundriß der Mulde durch eine oder mehrere Einschnürungen der Seitenwände der Mulde asymmetrisch gestaltet. Dies bedingt jedoch einen komplett neuen Kolbenrohling, d.h. einen von einem Dieselmotorkolben abweichende Grundform. Ein Beispiel für eine solche Art von Motor wird in JP-2003214167 gezeigt. Aufgabe der vorliegenden Erfindung ist es daher, ein Gasottomotor mit verbessertem Verbrennverhalten zur Verfügung zu stellen.

Diese Aufgabe wird erfindungsgemäß durch einen Gasottomotor gemäß Anspruch 1 sowie ein Gasottomotor gemäß Anspruch 7 gelöst.

Ein erfindungsgemäßer Gasottomotor umfaßt dabei mindestens einen Zylinder, in welchem ein Kolben bewegbar ist, wobei ein extern erzeugtes Gas-Luft-Gemisch in einem durch den Zylinderkopf, die Zylinderwände und den Kolbenboden begrenzten Brennraum verbrennbar ist. Erfindungsgemäß ist dabei vorgesehen, daß der Kolbenboden eine Kolbenmulde aufweist, wobei sich innerhalb der Kolbenmulde eine nicht rotationssymmetrische Erhebung erstreckt.

Die Asymmetrie der Kolbenmulde wird damit erfindungsgemäß zumindest auch durch eine Erhebung zur Verfügung gestellt, welche am Boden der Kolbenmulde angeordnet ist und deren Oberkante tiefer liegt als die Kolbenoberkante. Im Gegensatz zu den aus dem Stand der Technik bekannten Kolbenmulden, bei welchen nur die Seitenwände der Kolbenmulde eine asymmetrische Form aufwiesen, ergibt sich so ein verbessertes Turbulenzverhalten des Gas-Luft-Gemisches im Brennraum. Insbesondere wird durch die erfindungsgemäß innerhalb der Kolbenmulde angeordnete Erhebung die Strömung in der Kolbenmulde nicht nur in einer Ebene quer zur Kolbenachse beeinflußt, sondern auch in axialer Richtung, da die Strömung innerhalb der Mulde über die Erhöhung strömt und durch diese auch in axialer Richtung abgelenkt wird. Hierdurch wird ein verbessertes Verbrennverhalten erreicht, insbesondere beim Magerbetrieb. Zudem ist der erfindungsgemäße Gasottomotor einfacher herstellbar als die aus dem Stand der Technik bekannten Gasottomotoren. Insbesondere kann die Realisierung auf Basis der Gussrohteile eines Dieselmotors, bzw. der für die dieselmotorische Verbrennung optimierten Rohgussformen erfolgen.

In einer vorteilhaften Ausgestaltung der vorliegenden Erfindung beträgt das Verhältnis der maximalen Tiefe der Mulde zum Abstand zwischen der Oberkante der Erhebung zumindest in einem Teilbereich der Erhebung zwischen 1,5 und 4, insbesondere zwischen 2,5 und 3. Hierdurch wird das Turbulenzverhalten optimiert.

Vorteilhafterweise weist die Erhebung bei der vorliegenden Erfindung in radialer Richtung gemessen eine Erstreckung auf, welche zwischen 0,05 und 0,9 des Durchmessers der Mulde beträgt. Vorteilhafterweise beträgt die Erstreckung der Erhebung zwischen 0,1 und 0,5 des Durchmessers der Mulde.

Weiterhin vorteilhafterweise ist die Erhebung in Umfangsrichtung betrachtet relativ schmal. Insbesondere ist es von Vorteil, wenn die Erhebung in einem Basisbereich einen Winkelbereich von weniger als 70° einnimmt, insbesondere von weniger als 50°.

Bei der vorliegenden Erfindung ist die Mulde weiterhin vorteilhafterweise in einem oder mehreren Teilbereichen rotationssymmetrisch ausgeführt. Insbesondere ist die Mulde dabei vorteilhafterweise neben der nicht rotationssymmetrischen Erhebung rotationssymmetrisch ausgeführt.

Weiterhin kann vorgesehen sein, daß die Mulde in einem Ringbereich zunächst auf eine maximale Tiefe der Mulde abfällt und dann in Richtung auf die Mitte des Kolbens wieder auf eine geringere Tiefe ansteigt.

In einer möglichen Ausführungsform beträgt das Verhältnis des maximalen Durchmessers zur maximalen Tiefe der Mulde zwischen 1 und 6, insbesondere zwischen 3 und 4.

In einer besonders bevorzugten Ausführungsform der vorliegenden Erfindung erstreckt sich die Erhebung von einer Seitenwand der Mulde in Form einer Nase nach innen. Vorteilhafterweise fällt dabei die Oberkante der Erhebung von einem Basisbereich ausgehend von der Höhe der Oberkante aus nach unten ab. Vorteilhafterweise ragt dabei bereits der Basisbereich, welcher noch die Höhe der Oberkante aufweist, um eine gewisse Strecke in die Mulde hinein und trägt so zusätzlich zur Asymmetrie der Mulde bei.

Weiterhin kann vorgesehen sein, daß die Erhebung in einem mittleren Bereich ihrer Erstreckung auf eine maximale Tiefe abfällt und in Richtung auf die Mitte des Kolbens in einem Endbereich wieder auf eine geringere Tiefe ansteigt. Insbesondere kann dies vorgesehen sein, wenn auch der Muldenboden zunächst auf eine maximale Tiefe abfällt und dann wieder ansteigt. Vorteilhafterweise folgt die Oberkante der Erhebung dabei in dem Endbereich im wesentlichen der Form des sie umgebenden Muldenbodens.

Vorteilhafterweise ist dabei das Verhältnis der maximalen Tiefe der Mulde zum minimalen Abstand zwischen dem höchsten Punkt der Oberkante der Erhebung im Endbereich und der Kolbenoberkante zwischen 1,5 und 4, insbesondere zwischen 2,5 und 3.

Die Mulde des erfindungsgemäßen Kolbens kann dabei mehrere Erhebungen, insbesondere mehrere nasenförmige Erhebungen aufweisen, wie sie oben beschrieben wurde. In einer besonders bevorzugten Ausführungsform weist der erfindungsgemäße Kolben jedoch nur eine einzige solche Erhebung, insbesondere nur eine einzige Nase auf. Weiterhin Vorteilhafterweise ist die Mulde des erfindungsgemäßen Kolbens ansonsten rotationssymmetrisch um die Kolbenachse ausgeführt.

Weiterhin Vorteilhafterweise endet die Erhebung noch vor der Kolbenmitte. Insbesondere befindet sich so in der Kolbenmitte ein rotationssymmetrischer Bereich. Vorteilhafterweise liegt dabei das Verhältnis des Muldendurchmessers zu dem minimalen Abstand des inneren Endes der Erhöhung in einem Bereich zwischen 4 und 10, insbesondere zwischen 6 und 8. Vorteilhafterweise wird dabei der minimale Abstand des inneren Endes der Erhöhung zur Kolbenachse auf dem Niveau des höchsten Punktes des Endbereichs der Erhebung gemessen.

In einer bevorzugten Ausführung des erfindungsgemäßen Gasottomotors, bei welcher die Erhebung sich von einer Seitenwand der Mulde in Form einer Nase nach innen erstreckt, ist die Spitze der Nase gegenüber einer radialen Linie von der Kolbenachse zur Mitte des Basisbereichs der Nase versetzt, d.h. die Nase verläuft nicht komplett in radialer Richtung, sondern ist gegenüber der Kolbenachse geneigt. Vorteilhafterweise ist dabei die Nase in Strömungsrichtung gegenüber der radialen Linie verschoben.

Vorteilhafterweise liegt dabei das Verhältnis des Abstands der Spitze der Nase zu der radialen Linie zum Kolbendurchmesser in einem Bereich zwischen 0,01 und 0,1, insbesondere zwischen 0,02 und 0,06.

Weiterhin kann erfindungsgemäß vorgesehen sein, daß die Erhebung auf beiden Seiten jeweils über Radien in die Seitenwand übergeht. Vorteilhafterweise ist dabei ein Radius, den die Nase auf einer ersten Seite mit der Muldenwand bildet, um einen Faktor zwischen 1,5 und 5 größer als der Radius auf der zweiten Seite, insbesondere um einen Faktor zwischen 2,5 und 4. Vorteilhafterweise ist es dabei der Radius auf der strömungauftreffenden Seite der Nase, welcher größer ist als der Radius auf der strömungsabgewandten Seite.

Vorteilhafterweise sind bei der vorliegenden Erfindung im Zylinderkopf zwei Einlaßventile angeordnet. In diesem Fall hat es sich als besonders günstig erwiesen, daß die Hauptachse der Erhebung einen Winkel von 0 Grad bis 45 Grad, insbesondere von 10 Grad bis 30 Grad zu einer durch die beiden Ventilachsen aufgespannten Ebene einnimmt. In dem Fall, daß die Erhebung sich von einer Seitenwand der Mulde in Form einer Nase nach innen erstreckt, wird dabei vorteilhafterweise die Hauptachse der Nase von der Spitze der Nase und/oder dem höchsten Punkt der Nase zur Mitte des Basisbereichs der Nase hin gemessen.

Die erfindungsgemäße Ausgestaltung der Kolbenmulde ermöglicht eine optimierte Turbulenz des Luftgasgemisches im Brennraum und so eine schnellere Verbrennung. Unabhängig von dieser Ausgestaltung der Kolbenmulde umfaßt die vorliegende Erfindung weiterhin einen Gasottomotor, bei welchem auch der Drall in der Kolbenmulde verbessert wurde.

Die vorliegende Erfindung umfaßt dabei einen Gasottomotor mit mindestens einem Zylinder, in welchem ein Kolben bewegbar ist, wobei ein durch einen Gasmischer erzeugtes Gas-Luft-Gemisch in einem durch den Zylinderkopf, die Zylinderwände und den Kolbenboden begrenzten Brennraum verbrennbar ist, wobei der Zylinderkopf mindestens eine Einlaßventilöffnung und eine Auslaßventilöffnung aufweist. Erfindungsgemäß ist dabei vorgesehen, daß die mindestens eine Einlaßventilöffnung unterhalb des Ventilsitzbereiches und damit brennraumseitig asymmetrisch geformt ist. Diese asymmetrische Form der Einlaßventilöffnung erhöht den Drall des durch die Einlaßventilöffnung in den Brennraum einströmenden Gas-Luft-Gemisches. Vorteilhafterweise weist die Einlaßventilöffnung dabei eine Sichelfase auf, d.h. eine nur in einem Teilbereich ihres Umfangs angeordnete Abschrägung.

Vorteilhafterweise ist die Sichelfase dabei durch eine zur Achse des Ventils exzentrisch angeordnete konusförmige Fase gebildet. Eine solche Sichelfase ist durch ein rotierendes abspannendes Werkzeug problemlos herzustellen. Der Konus kann dabei sowohl eine gerade, als auch eine gewölbte Oberfläche aufweisen.

Vorteilhafterweise ist erfindungsgemäß die Sichelfase in Umfangsrichtung des Zylinders ausgerichtet, so daß sich ein Drall in Umfangsrichtung ergibt. Vorteilhafterweise nimmt dabei eine Linie durch den Mittelpunkt der exzentrischen konusförmigen Fase und die Achse des Ventils einen Winkel zwischen 10 Grad und 170 Grad zu einer radialen Linie durch die Achse des Ventils ein, weiterhin Vorteilhafterweise zwischen 30 Grad und 140 Grad.

Das erfindungsgemäße Prinzip einer asymmetrischen Einlaßöffnung wird dabei besonders vorteilhafterweise bei Zylinderköpfen mit zwei Einlaßventilöffnungen eingesetzt. Vorteilhafterweise sind dabei beide Einlaßventilöffnungen asymmetrisch geformt. Insbesondere können dabei beide Einlaßventilöffnungen Sichelfasen aufweisen. Vorteilhafterweise weisen dann beide Sichelfasen in die gleiche Drehrichtung, so daß beide einen Drall in die gleiche Drehrichtung erzeugen.

Weist der Zylinderkopf zwei Einlaßventilöffnungen auf, so zeigt vorteilhafterweise die Sichelfase einer ersten Ventilöffnung in Richtung auf die zweite Ventilöffnung. Vorteilhafterweise liegt dabei der Mittelpunkt der exzentrischen konusförmigen Fase der ersten Ventilöffnung in etwa auf der Verbindungslinie zwischen den Achsen der beiden Ventile, und insbesondere genau auf diese Verbindungslinie. Vorteilhafterweise liegt das zweite Ventil in Drallrichtung dabei stromabwärts des ersten Ventils.

Weiterhin kann bei zwei Einlaßventilöffnungen vorgesehen sein, daß die Sichelfase einer zweiten Ventilöffnung von dem ersten Ventil wegzeigt. Vorteilhafterweise weist dabei eine Linie durch den Mittelpunkt der exzentrischen konusförmigen Fase der zweiten Ventilöffnung und die Achse der zweiten Ventilöffnung einen Winkel von 20 Grad bis 60 Grad, insbesondere von 35 Grad bis 50 Grad mit der Verbindungslinie zwischen den Achsen der beiden Ventile auf. Vorteilhafterweise ist hier wiederum das zweite Ventil in Strömungsrichtung stromabwärts gegenüber dem ersten Ventil angeordnet.

Vorteilhafterweise bildet die exzentrische Sichelfase bei den oben genannten Gasottomotoren jeweils eine Linie, welche in einem radialen Schnitt die Ventilsitzfläche verlängert. Weiterhin kann vorgesehen sein, daß der Konuswinkel der Sichelfase dem Ventilsitzwinkel entspricht. Hierdurch ergibt sich eine strömungstechnisch optimale Kontur. Die Exzentrizität der konischen Bearbeitung ergibt sich somit durch den Ventilsitzwinkel sowie durch die Einpreßtiefe des Ventilsitzringes, d.h. der Höhe zwischen Ventilsitzunterkante und dem Zylinderkopfboden. In gleicher Weise ergibt sich die maximale Tiefe für die konische Bearbeitung durch die Einpreßtiefe der Ventilsitzringe sowie dem Ventilsitzwinkel.

Ein Gasottomotor mit einer oder mehreren exzentrischen Ventilöffnungen, wie sie oben beschrieben wurden, weist weiterhin vorteilhafterweise einen Kolben mit einer Mulde im Kolbenboden auf. Vorteilhafterweise ist die Kolbenmulde dabei asymmetrisch ausgeführt.

In einer besonders bevorzugten Ausführung wird dabei der Gasottomotor mit einer oder mehreren asymmetrischen Ventilöffnungen, wie er oben beschrieben wurde, mit einem Kolben mit einer asymmetrischen Erhebung innerhalb der Kolbenmulde ausgestattet, wie er eingangs beschrieben wurde. Die Kombination der erfindungsgemäßen asymmetrischen Verbrennungsmulde mit den erfindungsgemäßen asymmetrischen Ventilöffnungen führt dabei zu einer weiteren Erhöhung der Durchbrenngeschwindigkeit und somit zu einer weiteren Erhöhung des Wirkungsgrades. Die Kombination der oben jeweils eigenständig beanspruchten Maßnahmen ergibt damit eine besonders bevorzugte Ausführungsform.

Die erfindungsgemäßen Gasottomotoren weisen vorteilhafterweise ein Zylindervolumen pro Zylinder von mehr als 1 Liter, weiterhin Vorteilhafterweise von mehr als 1,5 Litern auf. Hierdurch ergeben sich insbesondere im stationären Betrieb der Gasottomotoren besonders gute Betriebseigenschaften.

Weiterhin vorteilhafterweise sind die Achsen der Ventilöffnungen parallel zur Achse des Kolbens angeordnet. Insbesondere stehen so die Ventilflächen senkrecht auf der Achse des Kolbens.

Durch die erfindungsgemäße Brennraumgeometrie kann der erfindungsgemäße Gasottomotor stabil auch mit einem sehr mageren Gas-Luft-Gemisch arbeiten. Vorteilhafterweise weist der erfindungsgemäße Gasottomotor daher eine Steuerung zur Ansteuerung des Gasmischers auf, welche ein mageres Gas-Luft-Gemisch erzeugt. Vorteilhafterweise weist das Gas-Luft-Gemisch dabei einen Lambda-Wert größer 1,2, weiterhin vorteilhafterweise von größer als 1,5 auf. Der erfindungsgemäße Gasottomotor wird dabei besonders bevorzugt im stationären Betrieb eingesetzt, d.h. bei konstanter Drehzahl und/oder konstanter Last. Vorteilhafterweise weist die Steuerung daher einen Betriebsmodus auf, in welchem der Gasottomotor stationär betrieben wird.

Der erfindungsgemäße Gasottomotor eignet sich insbesondere für stationäre Anlagen, in welchen Gas zur Erzeugung von elektrischer Energie und/oder Wärme zum Antrieb des Gasottomotors eingesetzt wird.

Die vorliegende Erfindung umfaßt daher weiterhin eine stationäre Anlage mit einem Gasottomotor, wie oben beschrieben wurde. Insbesondere wird die stationäre Anlage dabei zur Erzeugung von elektrischer Energie und/oder Wärme eingesetzt. Vorteilhafterweise ist der Gasottomotor dabei an einen Generator und/oder einen Wärmetauscher gekoppelt.

Alternativ ist es denkbar, den erfindungsgemäßen Gasottomotor auch für mobile Anwendungen einzusetzen.

Weiterhin ist der erfindungsgemäße Gasottomotor besonders einfach herstellbar, da auf Gussrohformen eines Dieselmotors zurückgegriffen werden kann. Hierdurch lohnt sich die Herstellung des erfindungsgemäßen Gasottomotors auch in kleinen Stückzahlen.

Die vorliegende Erfindung umfaßt dabei ein Verfahren zum Herstellen eines Gasottomotors, wie er oben beschrieben wurde, wobei ein Schmiederohling eines Dieselmotorkolbens verwendet und zur Herstellung des asymmetrischen Kolbenbodens bearbeitet wird. Insbesondere wird dabei in den Kolbenboden des Schmiederohlings eine Mulde mit einer erfindungsgemäßen asymmetrischen Erhöhung geschliffen und/oder gefräst.

Weiterhin kann erfindungsgemäß ein Gußrohling eines Zylinderkopfes eines Dieselmotors verwendet und zur Herstellung der asymmetrischen Einlaßöffnung bzw. Einlaßöffnungen bearbeitet werden. Insbesondere wird dabei erfindungsgemäß eine Sichelfase an dem Gußrohling angebracht.

Wie bereits oben beschrieben, eignet sich der erfindungsgemäße Gasottomotor insbesondere zu einem besonders mageren Betrieb und/oder zu einem stationären Betrieb.

Die vorliegende Erfindung umfaßt daher weiterhin ein Verfahren zum Betrieb eines Gasottomotors, wie er oben beschrieben wurde, wobei ein mageres Gas-Luft-Gemisch eingesetzt wird, wobei vorteilhafterweise der Lambda-Wert größer als 1,2, weiterhin vorteilhafterweise größer als 1,5 gehalten wird. Weiterhin vorteilhafterweise wird der Gasottomotor dabei stationär betrieben, d.h. bei konstanter Drehzahl oder konstanter Last.

Vorteilhafterweise treibt der Gasottomotor dabei einen Generator zur Erzeugung von elektrischer Energie an. Vorteilhafterweise wird weiterhin die Abwärme des erfindungsgemäßen Gasottomotors genutzt.

Die vorliegende Erfindung wird nun anhand von Ausführungsbeispielen sowie Zeichnungen näher dargestellt.

Dabei zeigen:
- Fig. 1a: ein Ausführungsbeispiel eines erfindungsgemäßen Kolbens in einer Schnittansicht entlang der erfindungsgemäßen Erhebung in der Kolbenmulde,
- Fig. 1b: das Ausführungsbeispiel des erfindungsgemäßen Kolbens in einer Draufsicht,
- Fig. 2a: den in Figur 1 a gezeigten Schnitt, wobei einige Abmessungen eingetragen sind,
- Fig. 2b: die in Figur 1b gezeigte Draufsicht, wobei einige Abmessungen eintragen sind,
- Fig. 2c: ein Schnitt durch den erfindungsgemäßen Kolben, welcher senkrecht zu dem Figuren 1 a und 2a gezeigten Schnitt verläuft,
- Fig. 3: eine Draufsicht auf das Ausführungsbeispiel des erfindungsgemäßen Kolbens, wobei zusätzlich die Ventilöffnungen des Zylinderkopfes eingezeichnet sind,
- Fig. 4a: ein Ausführungsbeispiel eines erfindungsgemäßen Zylinderkopfes mit asymmetrischen Ventilöffnungen,
- Fig. 4b: ein Schnitt durch den erfindungsgemäße Zylinderkopf,
- Fig. 5a: die bereits in Figur 4a gezeigte Draufsicht, wobei einige Bemessungen eingezeichnet sind,
- Fig. 5b: einen vergrößerten Ausschnitt der in Figur 5a gezeigten Draufsicht, und
- Fig. 5c: einen Schnitt durch den Zylinderkopfboden im Bereich der asymmetrischen Ausformung einer Ventilöffnung.

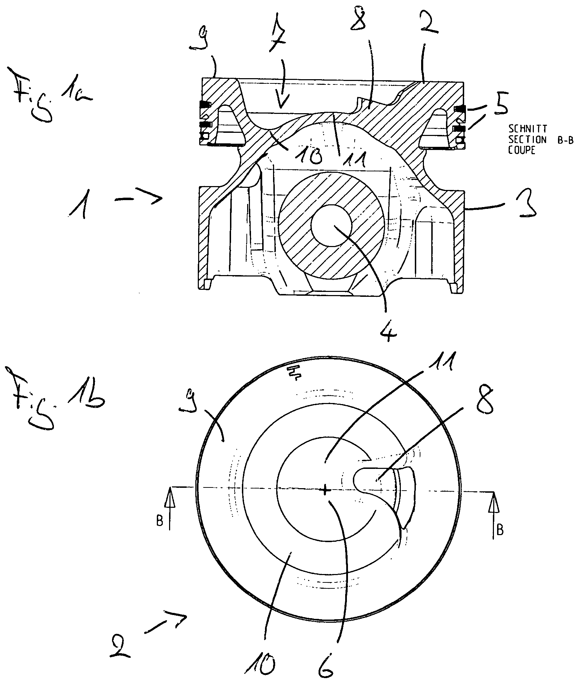

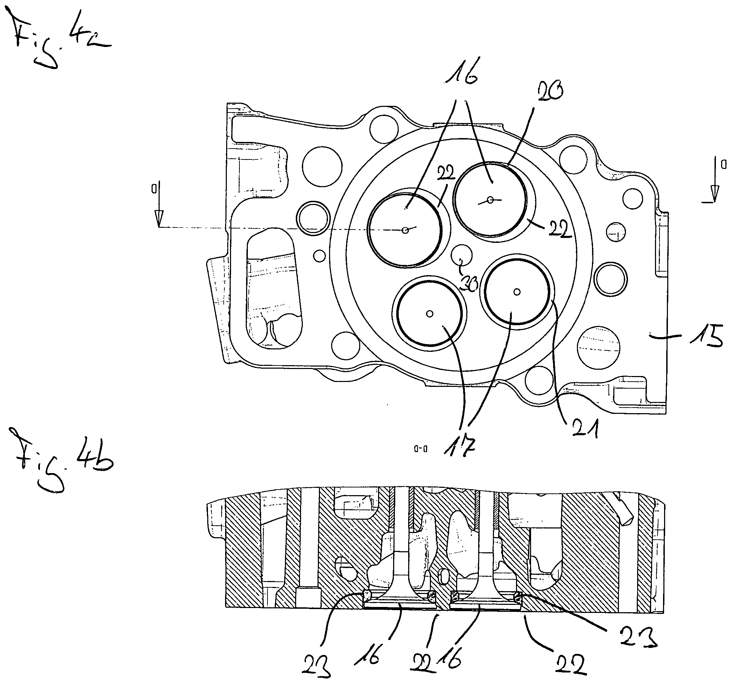

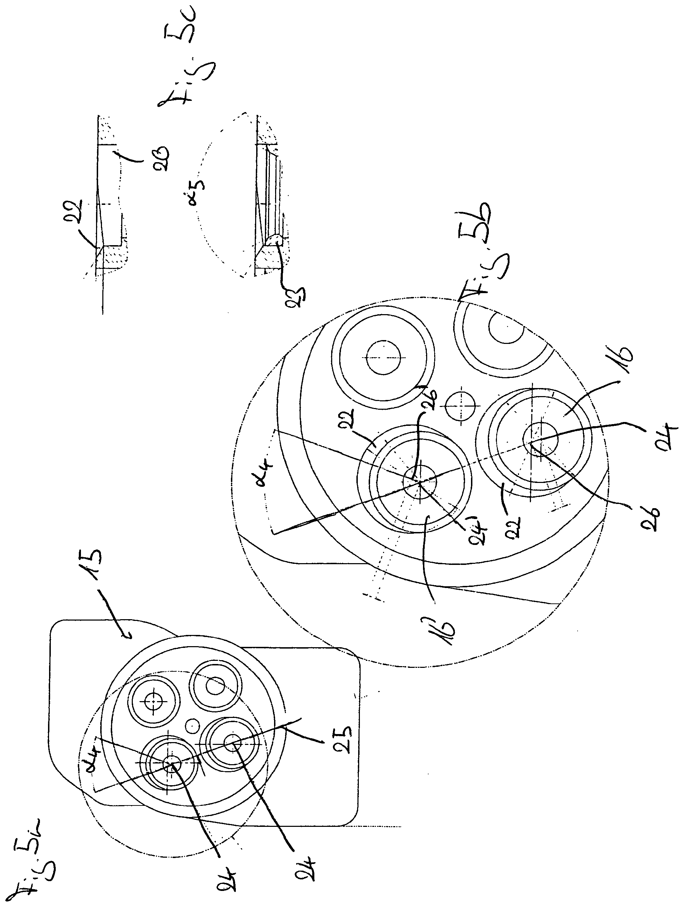

Ein Ausführungsbeispiel eines erfindungsgemäßen Kolbens mit einer asymmetrischen Kolbenmulde, wie er bei einem erfindungsgemäßen Gasottomotor zum Einsatz kommt, ist in Figuren 1 bis 3 näher dargestellt. Ein Ausführungsbeispiel eines erfindungsgemäßen Zylinderkopfes mit asymmetrischen Einlaßventilöffnungen, wie er bei einem erfindungsgemäßen Gasottomotor zum Einsatz kommt, ist in Figuren 4 und 5 näher dargestellt.

Der erfindungsgemäße Gasottomotor weist dabei mindestens einen nicht dargestellten Zylinder auf, in welchem ein Kolben linear bewegbar ist. Der Brennraum wird dabei durch einen Zylinderkopf, die Zylinderwände sowie den Kolbenboden gebildet. Der Gasottomotor weist dabei einen Gasmischer auf, welcher ein Gas-Luft-Gemisch erzeugt, welches in diesem Brennraum verbrannt wird, um so den Kolben zu bewegen. Als Gasmischer kommt dabei vorteilhafterweise eine Venturidüse zum Einsatz. Die Zündung des Gas-Luft-Gemisches erfolgt, da es sich um einen Gasottomotor handelt, durch eine Zündkerze, welche vorteilhafterweise am Zylinderkopf angeordnet ist. Erfindungsgemäß können dabei vier Ventile pro Zylinder vorgesehen sein. Weiterhin können die Ventilachsen parallel zur Zylinderachse verlaufen.

Die vorliegende Erfindung kann insbesondere bei Gasottomotoren mit einem relativ großen Zylindervolumen von mehr als einem Liter pro Zylinder, vorteilhafterweise mehr als 1,5 Litern pro Zylinder eingesetzt werden. Vorteilhafterweise wird der Gasottomotor dabei stationär betrieben, das heißt bei einer konstanten Drehzahl und/oder einer konstanten Leistung. Insbesondere kann der erfindungsgemäße Gasottomotor dabei zum Antrieb eines Generators in einem Kleinkraftwerk zur Erzeugung von elektrischer Energie unter Verwendung von Gas eingesetzt werden. Vorteilhafterweise wird dabei auch die Abwärme des Motors zu Heizzwecken genutzt. Zum Beispiel kann der erfindungsgemäße Motor dabei zum Verbrennen von Erd-, Bio-, Deponie-, Klär- oder anderen brennbaren Gasen eingesetzt werden.

Der erfindungsgemäße Gasottomotor kann dabei mit einem besonders mageren Gas-Luft-Gemisch betrieben werden, wobei der Betrieb mit Lamda-Werten von größer als 1,2 und vorteilhafterweise größer als 1,5 erfolgen kann. Der erfindungsgemäße Gasottomotor weist dabei eine Steuerung auf, welche den Gasmischer entsprechend ansteuert, um ein solch mageres Gas-Luft-Gemisch zu erzeugen.

Ein Ausführungsbeispiel eines erfindungsgemäßen Kolbens mit einer asymmetrischen Kolbenmulde, wie er bei einem erfindungsgemäßen Gasottomotor zum Einsatz kommen kann, ist dabei in Figuren 1 bis 3 näher dargestellt. Der Kolben 1 weist dabei einen Kolbenboden 2 auf, welcher im Einbauzustand dem Zylinderkopf zugewandt ist und damit den Brennraum begrenzt. Weiterhin weist der Kolben ein Kolbenhemd auf, welches zylindrisch geformt ist und mit einem gewissen Spiel in die Zylinderbohrung des Zylinders passt. Dabei sind am Kolbenhemd 3 Kolbenringe 5 angeordnet, welche als Dichtelement mit der Zylinderwand dienen. Weiterhin weist der Kolben eine Lagerung 4 für einen Kolbenbolzen auf, durch welchen das Pleuel mit dem Kolben verbindbar ist. Der erfindungsgemäße Kolben ist dabei als Schmiedeteil ausgeführt, wobei als Rohling hier ein Schmiedekolben eines Dieselmotors zum Einsatz kommt, welcher zur Herstellung der erfindungsgemäßen asymmetrischen Mulde entsprechend bearbeitet wird.

Der Kolbenboden 2 weist dabei eine Mulde 7 auf, wobei sich am Muldenboden eine Erhebung 8 erstreckt, welche zu einer Asymmetrie der Kolbenmulde bezüglich der Kolbenachse 6 führt. Die Erhebung 8 reicht dabei nicht bis zur Oberkante des Kolbens, so daß das Gas-Luft-Gemisch im Brennraum innerhalb der Mulde über die Erhebung hinwegfließen kann. Die Erhebung erzeugt so nicht nur in Querrichtung der Kolbenachse 6 eine erhöhte Turbulenz, sondern auch in Längsrichtung des Kolbens innerhalb der Kolbenmulde. Die Erhebung 8 wird dabei im Ausführungsbeispiel durch eine Nase gebildet, welche sich von einer Seitenwand der Mulde aus über den ansonsten rotationssymmetrisch ausgeführten Boden der Kolbenmulde 7 erstreckt.

Die Kolbenmulde 7 fällt dabei im symmetrischen Teil zunächst von einem Randbereich 9 des Kolbenbodens, welcher die Höhe der Kolbenoberkante aufweist, in einem Ringbereich 10 auf eine maximale Tiefe ab, um dann in einem mittleren Bereich 11 wieder anzusteigen. Die Nase 8 folgt dabei im wesentlichen dieser Kontur, und fällt daher in einem mittleren Bereich ebenfalls auf eine maximale Tiefe der Erhebung ab, um dann wieder zur Mitte hin leicht anzusteigen. Die Nase 8 endet jedoch noch vor Erreichen der Achse 6 des Kolbens und weist daher einen gewissen Abstand zu dieser auf.

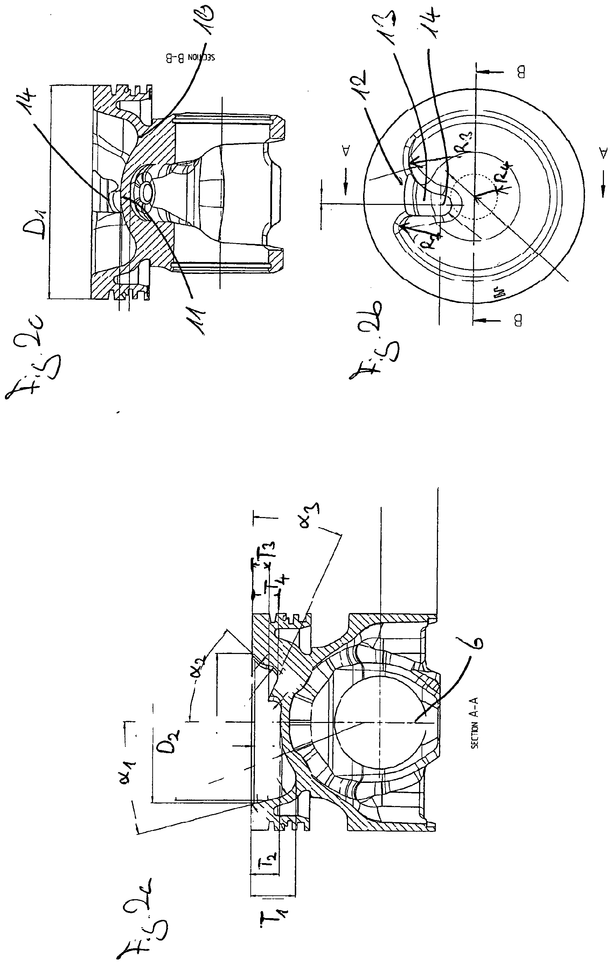

Wie insbesondere aus Fig. 2b besonders deutlich wird, weist die Nase 8 dabei einen Basisbereich 12 auf, welcher die Höhe der Oberkante des Kolbens aufweist und bereits eine gewissen Strecke in die Kolbenmulde hineinragt. Von diesem Basisbereich 12 aus fällt die Oberkante der Nase dann in einen Bereich 13 ab, um dann wieder leicht bis zum Ende der Nase anzusteigen. Die Spitze der Nase bildet dabei einen Halbkreis um den Mittelpunkt 14.

Die Nase 8 ist dabei nicht radial ausgerichtet, sondern in Strömungsrichtung gegenüber einer radialen Richtung verschoben bzw. schräg gegenüber einer solchen radialen Richtung angeordnet. Dabei ist der Radius, welchen die Nase in Anströmbereich mit der Seitenwand der Mulde aufweist, größer als auf der gegenüberliegenden Seite.

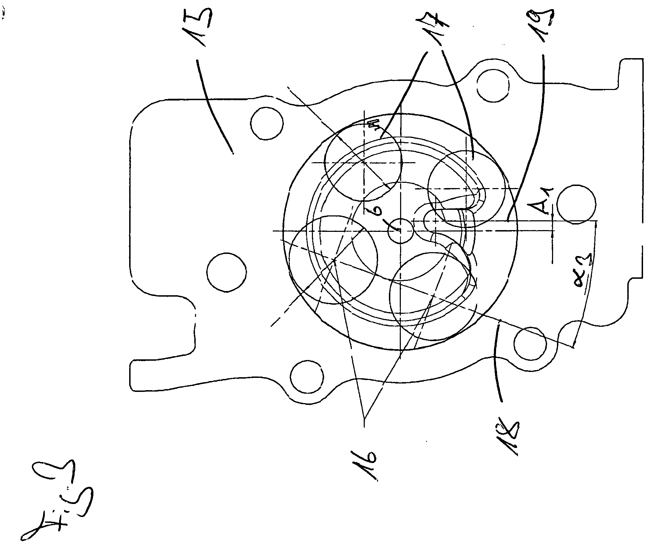

Die bevorzugten Abmessungen eines erfindungsgemäßen Kolbens, bei welchem eine Nase in der konischen Topfmulde angeordnet ist, werden nun anhand der Figuren 2a bis 2c näher beschrieben. Der erfindungsgemäße Kolben weist vorteilhafterweise eine oder mehrere der folgenden Bemaßungen auf:
- Die Kolbenmulde weist in Ihrem radialsymmetrischen Bereich vorteilhafterweise einen maximalen Durchmesser D2 mit einem Verhältnis D1 zu D2 zwischen 1,05 und 2, weiterhin vorteilhafterweise zwischen 1,1 und 1,5 auf.
- Die Kolbenmulde fällt vom Muldenrand aus zunächst mit einem Winkel α1 nach unten ab, wobei der Winkel α1 zwischen 0° und 30°, vorteilhafterweise zwischen 10 und 20° betragen kann.
- Der Muldenboden fällt zunächst auf eine maximale Tiefe T1 ab, um in Richtung auf die Kolbenmitte wieder auf eine Tiefe T2 anzusteigen. Das Verhältnis des Durchmessers D2 zur maximalen Tiefe T1 der Mulde beträgt dabei zwischen 1 und 6, vorteilhafterweise zwischen 3 und 4. Das Verhältnis zwischen der maximalen Tiefe T1 und der Tiefe T2 im mittleren Bereich der Mulde beträgt dabei zwischen 1,05 und 3, weiterhin vorteilhafterweise zwischen 1,1 und 2.
- Die in der Kolbenmulde angeordnete Nase 8 fällt zunächst von einem Basisbereich 12 mit einem Winkel α2 zur Kolbenmitte hin ab, wobei der Winkel α2 vorteilhafterweise zwischen 10 und 60°, weiterhin vorteilhafterweise zwischen 40° und 50° beträgt. Daraufhin fällt die Nase insbesondere in einem zweiten Bereich stärkerer Neigung weiter ab, und erreicht eine maximale Tiefe t4 der Nase. Von dort aus steigt die Nase wieder zu ihrer maximalen Höhe t3 an. Die Nase fällt dann zum rotationssymmetrischen Muldenboden ab, bevor sie die Mitte des Kolbens erreicht. Der Abfall von der maximalen Höhe t3 zum rotationssymmetrischen Kolbenboden erfolgt dabei vorteilhafterweise relativ steil, wobei der Winkel zwischen der Oberkante der Nase im ansteigenden Bereich von der Höhe t4 auf die Höhe t3 zur abfallenden Kante kleiner als 90° ist, weiterhin vorteilhafterweise kleiner als 80°.
- In vorteilhafter Weise beträgt das Verhältnis der maximalen Muldentiefe T1 zum minimalen Abstand der Nase zur Kolbenoberkante T3 zwischen 1,5 und 4, vorteilhafterweise zwischen 2 und 3,5.
- Der Abstand R4 der Nasenspitze zur Kolbenachse, welcher auf dem Niveau der maximalen Erhöhung der Nase gemessen wird, ist dabei größer 0. Vorteilhafterweise ergibt sich dabei ein Verhältnis des Muldendurchmessers D2 zu dem Radius R4 zwischen 4 und 10, weiterhin vorteilhafterweise zwischen 6 und 8.
- Die Nase ist vorteilhafterweise bezüglich einer radialen Richtung asymmetrisch ausgeführt, wobei die Längsachse der Nase gegenüber einer Linie durch die Kolbenachse zur Mitte des Basisbereichs der Nase um einen gewissen Winkel verschoben ist. Der Abstand des Mittelpunkts 14 der Nasenspitze zu einer solchen radialen Linie weist dabei ein Verhältnis zum Kolbendurchmesser zwischen 0,01 und 0,1 auf, vorteilhafterweise zwischen 0,02 und 0,06.
- Weiterhin ist der Radius R3, welchen die Nase auf der strömungsauftreffenden Seite mit der Muldenwandung bildet, um einen Faktor zwischen 2 und 5, vorteilhafterweise zwischen 3 und 4 größer als der Radius R2 auf der strömungsabgewandten Seite der Nase.
- Der erfindungsgemäße Kolben wird dabei vorteilhafterweise in einem Motor mit einem Vierventilkonzept eingesetzt, wie dies in Figur 3 dargestellt ist. Dabei sind am Zylinderkopf zwei Einlassventile 16 und zwei Auslassventile 17 angeordnet.
- Vorteilhafterweise ist die Nase zu einer Ebene 18, welche durch die Positionen der beiden Ventilachsen der Ventile 16 aufgespannt wird, um die Zylinderachse 6 in Strömungsrichtung um einen Winkel α3 zwischen 0 und 45°, vorteilhafterweise zwischen 10 und 30° verschoben. Dieser Winkel α3 wird dabei vorteilhafterweise zwischen der Ebene 18 durch die Ventilachsen der Einlassventile 16 sowie einer Linie gemessen, welche durch die Zylinderachse 6 sowie den Mittelpunkt des Basisbereichs 12 der Nase hindurchführt. Der Mittelpunkt des Basisbereichs bestimmt sich dabei entlang der Kante, an welcher die Nase von der Höhe der Kolbenoberkante abfällt, in Umfangsrichtung.

Der entsprechende Zylinderkopf 15 ist dabei in Figur 3 gezeigt, wobei die Einlassventile 16, die Auslassventile 17 sowie im Bereich der Kolbenachse 6 die Zündkerze gezeigt sind.

Ein weiterer Aspekt der vorliegenden Erfindung ist nun in Figuren 4 und 5 dargestellt. Dieser Aspekt kann sowohl in Kombination mit dem erfindungsgemäßen Kolben, als auch für sich genommen bei Gasottomotoren erfindungsgemäß zum Einsatz kommen. Zur Drallerhöhung sind dabei die Einlassöffnungen 16 im Zylinderkopf asymmetrisch geformt. Hierfür weisen die Einlassöffnungen, welche im Bereich des Ventilsitzes kreisförmig ausgeführt sind, Sichelfasen 22 auf.

Die Sichelfasen sind dabei im Ausführungsbeispiel durch eine exzentrische Einbringung einer konusförmigen Bearbeitung unterhalb der Ventilsitzringe 23 vorgenommen. Wie aus Fig. 4a und nochmals deutlich aus Figuren 5a und b hervorgeht, liegen die Taschen der Sichelfasen dabei in Richtung des positiven Dralls, das heißt in Richtung der strömungstechnischen Veränderung des Drallkanals. Insbesondere sind die Sichelfasen 22 dabei bei beiden Einlassventilen 16 in gleicher Drehrichtung bezüglich der Längsachse 6 des Zylinders angeordnet, und wirken so zur Erzeugung eines Dralls zusammen.

Verbindet man dabei die Ventilachsen 24 der beiden Einlassventile und bezeichnet man das erste Ventil in Drallrichtung mit Ventil 1, so liegt der Mittelpunkt der exzentrisch angebrachten konusförmigen Bearbeitung dieses Ventils 1 auf dieser Verbindungslinie, wie dies in Fig. 5b zu erkennen ist. Das erste Ventil trägt dabei das Bezugszeichen 16 und weist die Ventilachse 24 auf, das zweite Ventil trägt das Bezugszeichen 16' und weist die Ventilachse 24' auf. Der Mittelpunkt 26 der exzentrisch angebrachten konusförmigen Bearbeitung des ersten Ventils 16 liegt dabei auf der eingezeichneten Verbindungslinie zwischen den Achsen 24 und 14'.

Der Mittelpunkt 26' der Exzentrizität des zweiten Ventils 16' liegt auf einer Achse bezüglich der Ventilachse 24' des zweiten Ventils 16', welche um 35 bis 50° von der Verbindungslinie zwischen den Achsen 24 und 24' in Strömungsrichtung verdreht ist. Dieser Winkel zwischen 35 und 50° ist dabei als α4 in Figuren 5a und 5b eingezeichnet.

Die Exzentrizität der konischen Bearbeitung ist definiert durch den Ventilsitzwinkel α5 sowie durch die Einpreßtiefe des Ventilsitzringes, das heißt der Höhe zwischen Ventilsitzunterkante und Zylinderkopfboden. Dabei entspricht der Konuswinkel der exzentrischen Bearbeitung dem Ventilsitzwinkel α5, um so eine strömungstechnisch optimale Kontur zu ergeben.

Die maximale Tiefe der konischen Bearbeitung ist ebenfalls durch die Einpreßtiefe der Ventilsitzringe sowie durch den Ventilsitzwinkel gegeben. Betrachtet man dabei die Schnitte in 5c, welche radial zur Zylinderachse verlaufen, im Bereich der maximalen Exzentrizität, so ergibt die Ventilsitzfläche und die Sichelfase eine Linie.

Zur Herstellung eines erfindungsgemäßen Gasottomotors kann auf die Komponenten bestehender Dieselmotoren zurückgegriffen werden, so daß sich die Herstellung auch in Kleinserie rechnet. Dabei kann insbesondere zur Herstellung des Kolbens auf eine Schmiederohform eines Dieselmotorkolbens zurückgegriffen werden, zur Bereitstellung eines erfindungsgemäßen Zylinderkopfes auf eine Gußrohform eines Zylinderkopfrohlings eines Dieselmotors. Das Verbrennungskonzept eines solchen Dieselmotors kann dabei auf einem Niedrigdrallkonzept basieren.

Erfindungsgemäß wird der Brennraum nun durch den Einsatz von drall- und/oder turbulenzerhöhenden Maßnahmen modifiziert. Zur Erhöhung des Turbulenzniveaus wurde dabei durch die erfindungsgemäße Erhebung innerhalb der Mulde eine gezielte Asymmetrie eingeführt. Die asymmetrische Kolbenmulde führt dabei bereits zu einer deutlichen Erhöhung des Turbulenzniveaus und somit zu einer effektiven gasmotorischen Verbrennung, wodurch bereits diese Maßnahme alleine zu einer erheblichen Verbesserung führt.

Weiterhin kann erfindungsgemäß eine Drallerhöhung im Bereich der Einlaßventilöffnung durch die erfindungsgemäße Asymmetrie dieser Einlaßöffnung vorgenommen werden. Auch diese asymmetrischen Einlaßöffnung kann bereits für sich genommen zu einer erheblichen Verbesserung führen.

Die Kombination der asymmetrischen Verbrennungsmulde mit drallerhöhenden Maßnahmen im Bereich der Einlaßventile führt jedoch zu einer weiteren Erhöhung der Durchbrenngeschwindigkeit und somit zu einer Erhöhung des Wirkungsgrades. Die Kombination der beiden erfindungsgemäßen Maßnahmen stellt damit eine besonders vorteilhafte Ausführung der vorliegenden Erfindung dar.

## Patentansprüche

1. Gasottomotor mit mindestens einem Zylinder, in welchem ein Kolben (1) bewegbar ist, wobei ein extern erzeugtes Gas-Luft-Gemisch in einem durch den Zylinderkopf (15), die Zylinderwände und den Kolbenboden (2) begrenzten Brennraum verbrennbar ist, wobei der Kolbenboden (2) eine asymmetrische Kolbenmulde (7) aufweist,
**dadurch gekennzeichnet,**
**dass** sich innerhalb der Kolbenmulde (7) eine nicht rotationssymmetrische Erhebung (8) erstreckt, wobei das Verhältnis der maximalen Tiefe (T1) der Mulde (7) zum Abstand (T3) zwischen der Oberkante der Erhebung (8) und der Kolbenoberkante zumindest in einem Teilbereich der Erhebung (8) zwischen 1,5 und 4, insbesondere zwischen 2,5 und 3 liegt und/oder wobei die Erhebung (8) in radialer Richtung eine Erstreckung aufweist, welche zwischen 0,05 und 0,9 des Durchmessers der Mulde (7) beträgt, vorteilhafterweise zwischen 0,1 und 0,5 und/oder wobei die Erhebung (8) in einem von der Kolbenmitte entfernten Basisbereich (12) einen Winkelbereich von weniger als 70° einnimmt, insbesondere von weniger als 50°.

2. Gasottomotor nach Anspruch 1, wobei sich die Erhebung (8) von einer Seitenwand der Mulde (7) in Form einer Nase nach innen erstreckt, wobei vorteilhafterweise die Oberkante der Erhebung (8) von einem Basisbereich (12) ausgehend von der Höhe der Oberkante aus abfällt, wobei vorteilhafterweise bereits der Basisbereich (12) in die Mulde (7) hineinragt und/oder wobei die Erhebung (8) in einem mittleren Bereich (13) auf eine maximale Tiefe abfällt und in Richtung auf die Mitte des Kolbens (1) in einem Endbereich wieder auf eine geringere Tiefe ansteigt, wobei weiterhin vorteilhafterweise das Verhältnis der maximalen Tiefe (T1) der Mulde (7) zum minimalen Abstand (T3) zwischen dem höchsten Punkt der Oberkante der Erhebung (8) im Endbereich und der Kolbenoberkante zwischen 1,5 und 4, insbesondere zwischen 2,5 und 3 liegt.

3. Gasottomotor nach einem der vorangegangenen Ansprüche, wobei die Erhebung (8) noch vor der Kolbenmitte endet, wobei vorteilhafterweise das Verhältnis des Muldendurchmessers zu dem minimalen Abstand des inneren Endes der Erhöhung zur Kolbenachse (6) gemessen auf dem Niveau des höchsten Punktes der Erhebung (8) zwischen 4 und 10, insbesondere zwischen 6 und 8 liegt.

4. Gasottomotor nach einem der vorangegangenen Ansprüche, wobei die Erhebung (8) sich von einer Seitenwand der Mulde (7) in Form einer Nase nach innen erstreckt, wobei die Spitze der Nase (8) gegen eine radiale Linie von der Kolbenachse (6) zur Mitte des Basisbereichs (12) der Nase (8) versetzt ist, wobei vorteilhafterweise das Verhältnis des Abstands der Spitze der Nase (8) zu der radialen Linie zum Kolbendurchmesser im Bereich zwischen 0,01 und 0,1 liegt, insbesondere zwischen 0,02 und 0,06 und/oder wobei die Erhebung (8) sich von einer Seitenwand der Mulde (7) in Form einer Nase nach innen erstreckt, wobei ein Radius, den die Nase (8) auf einer ersten Seite mit der Muldenwandung bildet, um einen Faktor zwischen 1,5 und 5 größer ist als auf der zweiten Seite, insbesondere um einen Faktor zwischen 2,5 und 4.

5. Gasottomotor nach einem der vorangegangenen Ansprüche, wobei im Zylinderkopf (15) zwei Einlassventile (16) angeordnet sind, wobei die Hauptachse der Erhebung (8) einen Winkel (α3) von 0° bis 45°, insbesondere von 10° bis 30° zu einer durch die beiden Ventilachsen. aufgespannten Ebene einnimmt, wobei die Erhebung (8) sich vorteilhafterweise von einer Seitenwand der Mulde (7) in Form einer Nase nach innen erstreckt und die Hauptachse von der Spitze der Nase (8) und/oder dem höchsten Punkt der Nase (8) zur Mitte des Basisbereichs (12) der Nase (8) verläuft.

6. Gasottomotor, insbesondere nach einem der vorangegangenen Ansprüche, mit mindestens einem Zylinder, in welchem ein Kolben (1) bewegbar ist, wobei ein extern erzeugtes Gas-Luft-Gemisch in einem durch den Zylinderkopf (15), die Zylinderwände und den Kolbenboden (2) begrenzten Brennraum verbrennbar ist, wobei der Zylinderkopf (15) mindestens eine Einlassventilöffnung (16) und eine Auslassventilöffnung (17) aufweist,
**dadurch gekennzeichnet,**
**dass** die Einlassventilöffnung (16) unterhalb des Ventilsitzbereichs brennraumseitig asymmetrisch geformt ist, und insbesondere eine Sichelfase (22) aufweist.

7. Gasottomotor nach Anspruch 6, wobei die Sichelfase (22) durch eine zur Achse (24) des Ventils (16) exzentrische konusförmige Fase gebildet wird und/oder wobei die Sichelfase (22) in Umfangsrichtung des Zylinders ausgerichtet ist, wobei vorteilhafterweise eine Linie durch den Mittelpunkt (26) der exzentrischen konusförmigen Fase und die Achse (24) des Ventils (16) vorteilhafterweise einen Winkel zwischen 10° und 170° zu einer radialen Linie durch die Achse (24) des Ventils (16) einnimmt.

8. Gasottomotor nach einem der Ansprüche 6 oder 7, wobei der Zylinderkopf zwei Einlassventilöffnungen (16, 16') aufweist, welche beide asymmetrisch geformt sind und insbesondere beide Sichelfasen (22) aufweisen, wobei die Sichelfasen (22) vorteilhafterweise beide in die gleiche Drehrichtung weisen und/oder wobei der Zylinderkopf (15) zwei Einlassventilöffnungen (16, 16') aufweist, wobei die Sichelfase (22) der ersten Ventilöffnung (16) in Richtung auf die zweite Ventilöffnung (16') zeigt, wobei vorteilhafterweise der Mittelpunkt (26) der exzentrischen konusförmigen Fase der ersten Ventilöffnung (16) in etwa auf der Verbindungslinie zwischen den Achsen (24, 24') der beiden Ventile (16, 16') liegt und/oder wobei die Sichelfase (22) der zweiten Ventilöffnung (16') von dem ersten Ventil (16) weg zeigt und vorteilhafterweise eine Linie durch den Mittelpunkt (26') der exzentrischen konusförmigen Fase der zweiten Ventilöffnung (16') und die Achse (24') der zweiten Ventilöffnung einen Winkel (α4) von 20° bis 60°, insbesondere von 35° bis 50° mit der Verbindungslinie zwischen den Achsen (24, 24') der beiden Ventile (16, 16') aufweist.

9. Gasottomotor nach einem der Ansprüche 6 bis 8, wobei die exzentrische Sichelfase (22) in einem radialen Schnitt zur Ventilachse (24) eine Linie bildet, welche die Ventilsitzfläche verlängert und/oder wobei der Konuswinkel der exzentrischen Sichelfase (22) dem Ventilsitzwinkel (α5) entspricht.

10. Gasottomotor nach einem der vorangegangenen Ansprüche mit einem Zylindervolumen von mehr als 1l, vorteilhafterweise von mehr als 1,5l und/oder wobei die Achsen der Ventile (16, 17) parallel zur Achse (6) des Kolbens (1) angeordnet sind.

11. Gasottomotor nach einem der vorangegangenen Ansprüche mit einer Steuerung zur Ansteuerung des Gas-Mischers, welche ein mageres Gas-Luft-Gemisch erzeugt, vorteilhafterweise mit lambda > 1,2, weiterhin vorteilhafterweise mit lambda > 1,5, wobei die Steuerung den Gasottomotor vorteilhafterweise stationär betreibt.

12. Stationäre Anlage mit einem Gasottomotor nach einem der vorangegangenen Ansprüche insbesondere zur Erzeugung von elektrischer Energie und/oder Wärme.

13. Verfahren zum Herstellen eines Gasottomotors nach einem der vorangegangenen Ansprüche, wobei ein Schmiederohling eines Dieselmotorskolbens verwendet und zur Herstellung des asymmetrischen Kolbenbodens (2) bearbeitet wird und/oder wobei ein Gußrohling eines Zylinderkopfes (15) eines Dieselmotors verwendet und zur Herstellung der asymmetrischen Einlassventilöffnung (16) bearbeitet wird.

## Claims

1. A gas-gasoline engine having at least one cylinder in which a piston (1) is movable, wherein an externally generated gas-air mixture is combustible in a combustion space bounded by the cylinder head (15), the cylinder walls and the piston crown (2), wherein the piston crown (2) has an asymmetric piston recess (7),
**characterized in that**
a non-rotationally symmetrical elevated portion (8) extends within the piston recess (7), with the ratio of the maximum depth (T1) of the recess (7) to the distance (T3) between the upper edge of the elevated portion (8) and the upper piston edge being between 1.5 and 4, in particular between 2.5 and 3, at least in a partial region of the elevated portion (8) and/or with the elevated portion (8) having an extent in the radial direction that amounts to between 0.05 and 0.9 of the diameter of the recess (7), advantageously to between 0.1 and 0.5, and/or with the elevated portion (8) adopting an angular range in a base region (12) remote from the piston center of less than 70°, in particular of less than 50°.

2. A gas-gasoline engine in accordance with claim 1, wherein the elevated portion (8) extends from a side wall of the recess (7) inwardly in the form of a nose, with the upper edge of the elevated portion (8) advantageously dropping from a base region (12), starting from the height of the upper edge, with the base region (12) advantageously already projecting into the recess (7); and/or wherein the elevated portion (8) drops in a center region (13) to a maximum depth and increases to a smaller depth again in an end region in the direction toward the center of the piston (1), with the ratio of the maximum depth (T1) of the recess (7) to the minimal distance (T3) between the highest point of the upper edge of the elevated portion (8) in the edge region and the upper piston edge further advantageously being between 1.5 and 4, in particular between 2.5 and 3.

3. A gas-gasoline engine in accordance with one of the preceding claims, wherein the elevated portion (8) already ends before the piston center, with the ratio of the recess diameter to the minimal distance of the inner end of the elevated portion from the piston axis (6), measured at the level of the highest point of the elevated portion (8), advantageously being between 4 and 10, in particular between 6 and 8.

4. A gas-gasoline engine in accordance with one of the preceding claims, wherein the elevated portion (8) extends inwardly in the form of a nose from a side wall of the recess (7), with the tip of the nose (8) being offset with respect to a radial line from the piston axis (6) to the center of the base region (12) of the nose (8), with the ratio of the distance of the tip of the nose (8) to the radial line to the piston diameter advantageously being in the range between 0.01 and 0.1, in particular between 0.02 and 0.06; and/or wherein the elevated portion (8) extends inwardly in the form of a nose from a side wall of the recess (7), with a radius that the nose (8) forms with the recess wall on a first side being larger than on the second side by a factor between 1.5 and 5 , in particular by a factor between 2.5 and 4.

5. A gas-gasoline engine in accordance with one of the preceding claims, wherein two intake valves (16) are arranged in the cylinder head (15), with the main axis of the elevated portion (8) adopting an angle (a3) of 0° to 45°, in particular of 10° to 30°, to a plane spanned by the two valve axes, with the elevated portion (8) advantageously extending inwardly in the form of a nose from a side wall of the recess (7), and with the main axis extending from the tip of the nose (8) and/or from the highest point of the nose (8) to the center of the base region (12) of the nose (8).

6. A gas-gasoline engine, in particular in accordance with one of the preceding claims, having at least one cylinder in which a piston (1) is movable, wherein an externally generated gas-air mixture is combustible in a combustion space bounded by the cylinder head (15), the cylinder walls and the piston crown (2), with the cylinder head 15 having at least one intake valve opening (16) and one exhaust valve opening (17),
**characterized in that**
the intake valve opening (16) is formed asymmetrically at the combustion space side beneath the valve seat region and in particular has a crescent-shaped chamfer (22).

7. A gas-gasoline engine in accordance with claim 6, wherein the crescent-shaped chamfer (22) is formed by a conical chamfer eccentric with respect to the axis (24) of the valve (16); and/or wherein the crescent-shaped chamfer (22) is oriented in the peripheral direction of the cylinder, with a line through the center (26) of the eccentric conical chamfer and the axis (24) of the vale (16) advantageously adopting an angle from a radial line through the axis (24) of the valve (16) between 10° and 170°.

8. A gas-gasoline engine in accordance with one of the claims 6 or 7, wherein the cylinder head has two intake valve openings (16, 16") that are both shaped asymmetrically and in particular both have crescent-shaped chamfers (22); wherein the crescent-shaped chamfers (22) advantageously both face in the same direction of rotation and/or wherein the cylinder head (15) has two intake valve openings (16, 16'), wherein the crescent-shaped chamfer (22) of the first valve opening (16) faces in the direction of the second valve opening (16'), wherein the center (26) of the eccentric conical chamfer of the first valve opening (16) is advantageously on the connection line between the axes (24, 24') of the two valves (16, 16'); and/or wherein the crescent-shaped chamfer (22) of the second valve opening (16') faces away from the first valve (16) and advantageously has a line through the center (26') of the eccentric conical chamfer of the second valve opening (16') and the axis (24') of the second valve opening has an angle (α4) of 20° to 60°, in particular of 35° to 50°, with the connection line between the axes (24, 24') of the two valves (16, 16').

9. A gas-gasoline engine in accordance with one of the claims 6 to 8, wherein the eccentric crescent-shaped chamfer (22) forms a line in a radial section toward the valve axis (24) that extends the valve seat surface; and/or wherein the conical angle of the eccentric crescent-shaped chamfer (22) corresponds to the valve seat angle (α5).

10. A gas-gasoline engine in accordance with one of the preceding claims having a cylinder volume of more than 1l, advantageously of more than 1.51; and/or wherein the axes of the valves (16, 17) are arranged in parallel with the axis (6) of the piston (1).

11. A gas-gasoline engine in accordance with one of the preceding claims having a control for controlling the gas mixer that generates a lean gas-air mixture, advantageously with lambda > 1.2, further advantageously with lambda > 1.5, wherein the control advantageously operates the gas-gasoline engine in a steady state.

12. A stationary system having a gas-gasoline engine in accordance with one of the preceding claims, in particular for generating electrical energy and/or heat.

13. A method of manufacturing a gas-gasoline engine in accordance with one of the preceding claims, wherein a forged blank of a diesel engine piston is used and is machined for the manufacture of the asymmetrical piston crown (2); and/or wherein a cast blank of a cylinder head (15) of a diesel engine is used and is machined for the manufacture of the asymmetrical intake valve opening (16).

## Revendications

1. Moteur à gaz à explosion comprenant au moins un cylindre, dans lequel un piston (1) peut se déplacer, un mélange gaz-air généré de manière externe étant combustible dans une chambre de combustion limitée par la tête de cylindre (15), les parois de cylindre et le dessus de piston (2), le dessus de piston (2) comportant une cavité de piston (7) asymétrique,
**caractérisé en ce**
**qu'**une protubérance (8), qui ne présente pas de symétrie de révolution, s'étend à l'intérieur de la cavité de piston (7), le rapport de la profondeur maximale (T1) de la cavité (7) à la distance (T3) entre le bord supérieur de la protubérance (8) et le bord supérieur du piston est situé, au moins dans une partie de la protubérance (8), entre 1,5 et 4, en particulier entre 2,5 et 3 et/ou la protubérance (8) comportant dans la direction radiale une extension, qui représente entre 0,05 et 0,9 fois le diamètre de la cavité (7), avantageusement entre 0,1 et 0,5 et/ou la protubérance (8) occupant, dans une zone de base (12) éloignée du milieu du piston, une plage angulaire inférieure à 70°, en particulier inférieure à 50°.

2. Moteur à gaz à explosion selon la revendication 1, dans lequel la protubérance (8) s'étend depuis une paroi latérale de la cavité (7) sous la forme d'un nez vers l'intérieur, le bord supérieur de la protubérance (8) tombant avantageusement à partir d'une zone de base (12) depuis la hauteur du bord supérieur, la zone de base (12) dépassant déjà avantageusement dans la cavité (7) et/ou dans lequel la protubérance (8) tombe dans une zone médiane (13) à une profondeur maximale et remonte en direction du milieu du piston (1) dans une zone d'extrémité à une profondeur plus faible, le rapport de la profondeur maximale (T1) de la cavité (7) à la distance minimale (T3) entre le point le plus haut du bord supérieur de la protubérance (8) dans la zone d'extrémité et le bord supérieur de piston étant en outre avantageusement compris entre 1,5 et 4, en particulier entre 2,5 et 3.

3. Moteur à gaz à explosion selon l'une des revendications précédentes, dans lequel la protubérance (8) se termine avant le milieu du piston, le rapport du diamètre de la cavité à la distance minimale de l'extrémité intérieure de la bosse à l'axe de piston (6) mesurée au niveau du point le plus haut de la protubérance (8) étant avantageusement compris entre 4 et 10, en particulier entre 6 et 8.

4. Moteur à gaz à explosion selon l'une des revendications précédentes, dans lequel la protubérance (8) s'étend depuis une paroi latérale de la cavité (7) sous la forme d'un nez vers l'intérieur, la pointe du nez (8) étant décalée par rapport à une ligne radiale allant de l'axe de piston (6) au milieu de la zone de base (12) du nez (8), le rapport de la distance entre la pointe du nez (8) et la ligne radiale au diamètre du piston étant avantageusement situé dans la plage de 0,01 à 0,1, en particulier de 0,02 à 0,06 et/ou la protubérance (8) s'étendant depuis une paroi latérale de la cavité (7) sous la forme d'un nez vers l'intérieur, un rayon, que forme le nez (8) sur un premier côté avec la paroi de cavité, étant supérieur selon un facteur compris entre 1,5 et 5 par rapport au second côté, en particulier selon un facteur compris entre 2,5 et 4.

5. Moteur à gaz à explosion selon l'une des revendications précédentes, dans lequel deux soupapes d'admission (16) sont disposées dans la tête de cylindre (15), l'axe principal de la protubérance (8) formant un angle (α3) de 0° à 45°, en particulier de 10° à 30° par rapport à un plan déployé à travers les deux axes de soupape, la protubérance (8) s'étendant avantageusement depuis une paroi latérale de la cavité (7) sous la forme d'un nez vers l'intérieur et l'axe principal s'étendant de la point du nez (8) et/ou du point le plus haut du nez (8) au milieu de la zone de base (12) du nez (8).

6. Moteur à gaz à explosion, en particulier selon l'une des revendications précédentes, comprenant au moins un cylindre, dans lequel un piston (1) peut se déplacer, un mélange gaz-air généré de manière externe étant combustible dans une chambre de combustion limitée par la tête de cylindre (15), les parois de cylindre et le dessus de piston (2), la tête de cylindre (15) comportant au moins une ouverture de soupape d'admission (16) et une ouverture de soupape d'échappement (17),
**caractérisé en ce que**
l'ouverture de soupape d'admission (16) est formée de manière asymétrique en dessous de la zone de siège de soupape côté chambre de combustion, et comporte en particulier un chanfrein falciforme (22).

7. Moteur à gaz à explosion selon la revendication 6, dans lequel le chanfrein falciforme (22) est formé par un chanfrein conique excentrique par rapport à l'axe (24) de la soupape (16) et/ou dans lequel le chanfrein falciforme (22) est orienté dans le sens circonférentiel du cylindre, dans lequel avantageusement, une ligne passant par le centre (26) du chanfrein conique excentrique et l'axe (24) de la soupape (16) forme avantageusement un angle entre 10° et 170° par rapport à une ligne radiale passant par l'axe (24) de la soupape (16).

8. Moteur à gaz à explosion selon l'une des revendications 6 ou 7, dans lequel la tête de cylindre comporte deux ouvertures de soupape d'admission (16, 16"), qui sont toutes les deux formées de manière asymétrique et en particulier qui comportent toutes les deux des chanfreins falciformes (22), les chanfreins falciformes (22) étant avantageusement tous les deux orientés dans la même direction de rotation et/ou la tête de cylindre (15) comportant deux ouvertures de soupape d'admission (16, 16'), le chanfrein falciforme (22) de la première ouverture de soupape (16) étant orienté dans la direction de la seconde ouverture de soupape (16'), le centre (26) du chanfrein conique excentrique de la première ouverture de soupape (16) se trouvant avantageusement approximativement sur la ligne de liaison entre les axes (24, 24') des deux soupapes (16, 16') et/ou le chanfrein falciforme (22) de la seconde ouverture de soupape (16') étant orienté dans la direction opposée à la première soupape (16) et une ligne passant par le centre (26') du chanfrein conique excentrique de la seconde ouverture de soupape (16') et l'axe (24') de la seconde ouverture de soupape présentant avantageusement un angle (α4) de 20° à 60°, en particulier de 35° à 50° avec la ligne de liaison entre les axes (24, 24') des deux soupapes (16, 16').

9. Moteur à gaz à explosion selon l'une des revendications 6 à 8, dans lequel le chanfrein falciforme (22) excentrique forme, dans une coupe radiale par rapport à l'axe de soupape (24), une ligne, qui prolonge la surface de siège de soupape et/ou dans lequel l'angle de cône du chanfrein falciforme (22) excentrique correspond à l'angle de siège de soupape (α5).

10. Moteur à gaz à explosion selon l'une des revendications précédentes, comprenant un volume de cylindre supérieur à 1 l, de manière avantageuse supérieur à 1,5 l et/ou dans lequel les axes des soupapes (16, 17) sont disposés parallèlement à l'axe (6) du piston (1).

11. Moteur à gaz à explosion selon l'une des revendications précédentes, comprenant un organe de commande destiné à la commande du mélangeur de gaz, qui génère un mélange gaz-air pauvre, avantageusement avec lambda > 1,2, de manière encore plus avantageuse avec lambda > 1,5, l'organe de commande exploitant le moteur à gaz à explosion avantageusement de manière stationnaire.

12. Installation stationnaire comprenant un moteur à gaz à explosion selon l'une des revendications précédentes, en particulier pour la génération d'énergie électrique et/ou de chaleur.

13. Procédé de fabrication d'un moteur à gaz à explosion selon l'une des revendications précédentes, dans lequel une pièce brute forgée d'un piston de moteur diesel est utilisée et est transformée pour fabriquer le dessus de piston (2) asymétrique et/ou dans lequel une pièce brute moulée d'une tête de cylindre (15) d'un moteur diesel est utilisée et est transformée pour fabriquer l'ouverture de soupape d'admission (16) asymétrique.
